## Europäisches Patentamt
## European Patent Office
## Office européen des brevets

(11) Veröffentlichungsnummer: **0 218 932**
**B1**

(12) # EUROPÄISCHE PATENTSCHRIFT

(45) Veröffentlichungstag der Patentschrift:
22.03.89

(51) Int. Cl.⁴: **F16B 13/06, E04B 1/48**

(21) Anmeldenummer: **86112678.7**

(22) Anmeldetag: **13.09.86**

(54) Schwerlastanker mit Spreizhülse.

(30) Priorität: 05.10.85 DE 3535618

(43) Veröffentlichungstag der Anmeldung:
22.04.87 Patentblatt 87/17

(45) Bekanntmachung des Hinweises auf die Patenterteilung:
22.03.89 Patentblatt 89/12

(84) Benannte Vertragsstaaten:
CH DE FR GB IT LI SE

(56) Entgegenhaltungen:
DE-A- 2 163 550
FR-A- 2 212 869
FR-A- 2 226 031
GB-A- 2 017 248
GB-A- 2 048 418

(73) Patentinhaber: Impex-Essen Vertrieb von Werkzeugen GmbH, Dürrnerstrasse 1 Postfach 1463,
D-8800 Ansbach(DE)

(72) Erfinder: Mack. Karl, Am Hang 18, D-8800 Ansbach(DE)
Erfinder: Schmidt, Werner, Dollmannstrasse 112,
D-8800 Ansbach(DE)

(74) Vertreter: Sturies, Herbert et al, Patentanwälte Dr. Ing. Dipl. Phys. Herbert Sturies Dipl. Ing. Peter Eichler Brahmsstrasse 29, Postfach 20 12 42,
D-5600 Wuppertal 2(DE)

## Beschreibung

Die Erfindung betrifft einen Schwerlastanker zur Verankerung in einem in hartem Aufnahmematerial, insbesondere Beton, vorgeformten Loch, der mit einem an seinem setzrichtungsseitigen Ende einen Spreizkonus und an seinem anderen rückwärtigen Ende Lastaufnahmemittel tragenden Ankerbolzen sowie einer darauf verschieblich sitzenden, längsgeschlitzten und durch den relativ zu ihr bewegbaren Spreizkonus aufweitbaren Spreizhülse, die im rückwärtigen Bereich dem Lochdurchmesser entsprechend zylindrisch gestaltet ist und in ihrem längsgeschlitzten Spreizbereich eine nach außen offene Einschnürung sowie an ihrem dem Spreizkonus zugewandten Ende einen aus der Einschnürung vorspringenden, mit einer Schneidkante versehenen Schneidring aufweist.

Schwerlastanker obiger Art sind durch die DE-A 3 146 027 bekannt. Die in ihrem längsgeschlitzten Spreizbereich vorhandene Einschnürung ist zylindrisch gestaltet. Auch der aus ihr radial vorspringende Schneidring besitzt einen zylindrischen Außenumfang, wobei die Stirnfläche der Spreizhülse bzw. ihres Schneidringes konisch zurückspringt, so daß sich eine in Setzrichtung weisende Schneidkante ergibt. Zum Setzen dieses Schwerlastankers werden der hier als Gewindeanker mit fest auf ihm sitzenden Spreizkonus ausgebildete Ankerbolzen mitsamt der Spreizhülse in das Aufnahme- bzw. Bohrloch im Aufnahmematerial soweit eingesetzt, bis der Spreizkonus auf dem Lochgrund aufsitzt. Sodann muß durch einen Bohrhammer od. dgl. Schlagwerkzeug die Spreizhülse axial eingeschlagen werden, wobei sie über den Spreizkonus getrieben und dadurch an ihrem den Schneidring tragenden Ende zunehmend aufgeweitet wird. Die Schneidkante des Schneidringes, die dabei im wesentlichen axial und nur geringfügig auch radial bewegt wird, übt dabei eine entsprechende Schabewirkung auf die Lochwandung aus, wodurch das Aufnahmeloch zu seinem Grund hin eine entsprechende Erweiterung bzw. Hinterschneidung erfährt, in die die Spreizhülse mit ihrem aufgeweiteten Spreizende hineinragt. Dabei soll es dann nicht nur zu einem reibsondern auch formschlüssigen Verankerungssitz des Schwerlastankers im Aufnahmematerial kommen. Wie sich aber gezeigt hat, läßt die so erzielbare Verankerungsfestigkeit noch zu wünschen übrig, zumal es beim Einschlagen der Spreizhülse nur zu einem sehr bedingten formschlüssigen Sitz zwischen Hülse und Aufnahmematerial kommt. Das liegt vor allem daran, daß durch die im wesentlichen axial gerichtete Schabewirkung des Spreizhülsen-Schneidringes unregelmäßige Materialausbrüche nicht zu vermeiden sind, die in Verbindung mit dem zwischen der Lochwandung und der zylindrischen Einschnürung der Spreizhülse verbleibenden Hohlraum die Verankerungsfestigkeit des Schwerlastankers erheblich beeinträchtigen. Darüberhinaus wird hier die Montage des Schwerlastankers durch das zum axialen Einschlagen der Spreizhülse erforderliche Schlagwerkzeug entsprechend erschwert.

Der Erfindung liegt die Aufgabe zugrunde, einen Schwerlastanker der eingangs erwähnten Gattung dahingehend zu verbessern, daß er auch in hartem Aufnahmematerial, wie insbesondere Beton u. dgl., einen noch besseren und leichter erzielbaren formschlüssigen Verankerungssitz gewährleistet, wobei es zu einer echten Hinterschneidung zwischen dem Aufnahmematerial und der Spreizhülse kommen soll.

Diese Aufgabe wird ausgehend von einem gattungsgemäßen Schwerlastanker erfindungsgemäß dadurch gelöst, daß die an seiner Spreizhülse vorhandene Einschnürung mit zum Schneidring abnehmendem Außendurchmesser konisch ausgebildet ist und der Schneidring ein V-förmiges Profil mit radial nach außen weisender Schneidkante besitzt.

Auf diese Weise kann sich beim durch Zurückziehen des Spreizkonus erfolgenden Aufweiten der Spreizhülse deren Schneidringkante im wesentlichen radial in das Aufnahmematerial eingraben bzw. einschneiden, ohne daß es dabei zu einer Axialbewegung der Spreizhülse im Spreizloch kommt. Zugleich wird durch die konische Ausbildung der Einschnürung gewährleistet, daß die Spreizhülse im ordnungsgemäß herbeigeführten formschlüssigen Verankerungsitz über ihre gesamte Einschnürung hinweg an der Lochwandung fest anliegt, wodurch nicht nur ein zusätzlicher Reibungshaftsitz erzielt sondern zugleich auch das vom V-förmig profilierten Schneidring hinterschnittene Lochwandungsmaterial zusätzlich abgestützt und damit dessen Abscherfestigkeit noch entsprechend erhöht wird. Im übrigen wird die Verankerungssitzfestigkeit auch dadurch erhöht, daß die Spreizhülse während ihres durch den Spreizkonus erfolgenden Aufweitens keinerlei Axialverschiebung gegenüber dem Lochwandungsmaterial vollführt, da der sich von Beginn des Aufweitvorganges in das Aufnahmematerial eingrabende Schneidring der Spreizhülse solches verhindert. Schließlich ist es von Vorteil, daß die Spreizhülse nicht durch ein entsprechendes Schlagwerkzeug eingeschlagen werden muß, sondern allein über den Ankerbolzen durch entsprechende Betätigung seines rückwärtig angeordneten Lastaufnahmemittels in ihre feste Verankerungsposition gebracht werden kann.

Die Spreizhülse ist innen durchgehend zylindrisch gestaltet. Sie wird dadurch bei der relativ zu ihr erfolgenden Einziehbewegung des Spreizkonus an ihrem dem Schneidring tragenden Ende aufgebogen und dabei mit ihrer konischen Einschnürungsfläche zugleich breitflächig gegen die Aufnahmelochwandung gedrückt.

Nach einer vorteilhaften Ausgestaltung der Erfindung kann die Spreizhülse in ihrem konischen Einschnürungsbereich auch noch mit weiteren V-förmig profilierten Schneidringen versehen sein, deren nach außen weisende Schneidkanten durchweg gleiche Durchmesser besitzen und mit dem rückwärtigen zylindrischen Bereich der Spreizhülse fluchten. Auf diese Weise können also während des Aufspreizens der Spreizhülse auch die übrigen V-förmigen Schneidringe sich mit ihren nach außen weisenden Schneidkanten radial in die Aufnahmelochwandung einschneiden, so daß sich hier eine mehrfache formschlüssige Hinterschneidung zwi-

schen der Spreizhülse und der Aufnahmelochwandung ergibt.

Es sei an dieser Stelle erwähnt, daß Schwerlastanker mit formschlüssigem Hinterschneidsitz ihrer Spreizhülse in der Aufnahmelochwandung bereits bekannt sind, z.B. durch die DE-C 3 312 141. Sie besitzen eine große Verankerungsfestigkeit, erfordern aber im Gegensatz zu dem erfindungsgemäß beschaffenen Schwerlastanker eine von vornherein mit einer Hinterschneid-Vergrößerung versehene und daher entsprechend schwierig herstellbare Aufnahmebohrung sowie auch vergleichweise kompliziert beschaffene Schwerlastanker, die dazu nämlich mit besonderen radial ausfahrbaren Verriegelungsklauen versehen sein müssen. Der erfindungsgemäß beschaffene Schwerlastanker ist dagegen von wesentlich einfacherer Bauart und erfordert keine vorgefertigten Bohrungshinterschneidungen im Aufnahmematerial.

Der Ankerbolzen ist vorteilhaft als Gewindeanker mit fest auf ihm sitzendem Spreizkonus und einer auf seinem rückwärtig angebrachten Schraubgewinde sitzenden Spannmutter ausgebildet. Es ist aber auch möglich, den Ankerbolzen als mit einem das Lastaufnahmemittel bildenden Betätigungskopf versehenen Schraubbolzen auszubilden, auf dessen setzrichtungsseitigem Gewindeende der mit entsprechendem Innengewinde versehene Spreizkonus schraubverstellbar gelagert ist, wobei dann zwischen letzterem und dem Schraubbolzenkopf die Spreizhülse sowie ein verformbarer Zwischenring und eine einen axial nachgiebigen Federring tragende Distanzhülse auf dem Schraubbolzen gelagert sind.

In der Zeichnung sind mehrere Ausführungsbeispiele erfindungsgemäß gestalteter Schwerlastanker dargestellt. Dabei zeigt

Fig. 1 eine erste besonders vorteilhafte Ausführungsform des Schwerlastankers,

Fig. 2 letzteren in montiertem Zustand in teilweiser Schnittdarstellung,

Fig. 3 einen Schwerlastanker mit mehreren auf seiner Spreizhülse vorhandenen Schneidringen und

Fig. 4 einen Schwerlastanker mit als Schraubbolzen und darauf schraubverstellbarem Spreizkonus ausgebildetem Ankerbolzen.

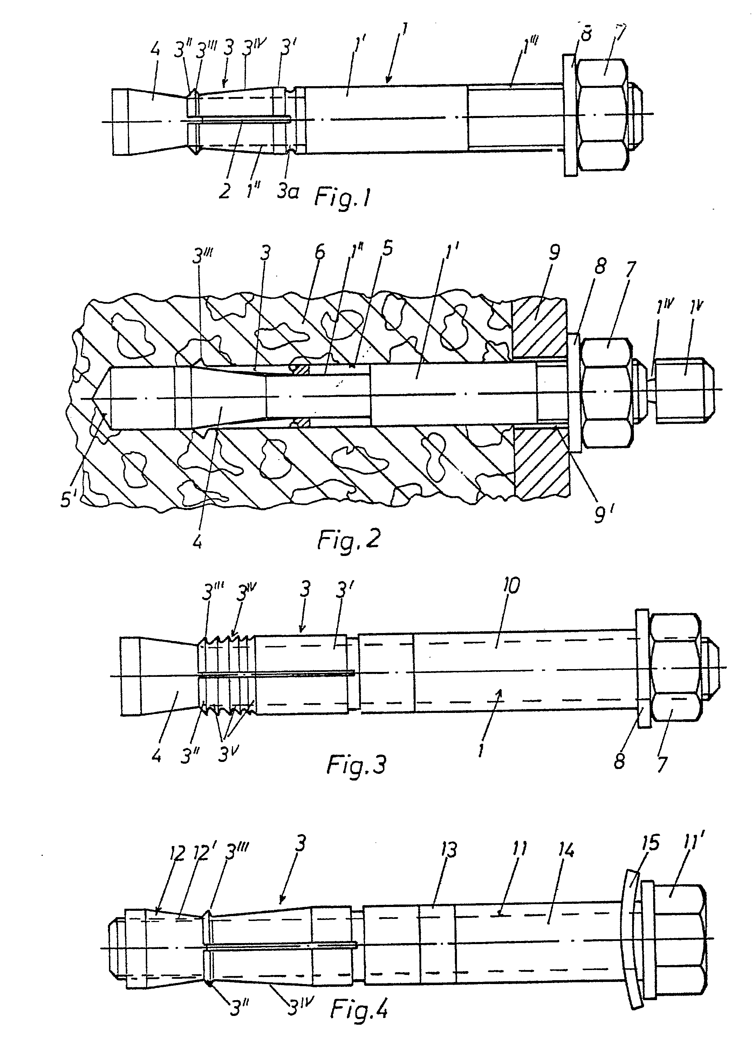

Der in Fig. 1 und 2 dargestellte Schwerlastanker besteht im wesentlichen aus dem generell mit 1 bezeichneten Ankerbolzen und der darauf verschieblich sitzenden, mit Längsschlitzen 2 versehenen Spreizhülse 3. Der Ankerbolzen 1 ist hier als Gewindeanker ausgebildet. Er trägt an seinem setzrichtungsseitigen Ende einen fest auf ihm sitzenden Spreizkonus 4, der vorteilhaft einstückig mit dem Gewindeanker 1 ist. Letzterer besitzt einen im Durchmesser dem Aufnahmeloch 5 im Aufnahmematerial 6, z.B. Beton, entsprechenden zylindrischen Mittelbereich 1' sowie zwischen letzterem und dem Spreizkonus 4 einen im Durchmesser engeren Aufnahmebereich 1'' für die Spreizhülse 3. Rückwärtig des zylindrischen Mittelbereichs 1' befindet sich der Gewindebereich 1''', auf dem die Spannmutter 7 sowie eine Beilagscheibe 8 angeordnet sind.

Die Spreizhülse 3 ist in ihrem rückwärtigen Bereich 3' mit einer federnden Ringnut 3a versehen, in die die Längsschlitze 2 auslaufen, im übrigen aber zylindrisch gestaltet, wobei der Zylinderdurchmesser dem des zylindrischen Mittelbereichs 1' des Gewindeankers 1 entspricht. An ihrem dem Spreizkonus 4 zugewandten Ende ist die Spreizhülse 3 mit einem V-förmig profilierten, insbesondere gehärteten Schneidring 3'' versehen, der eine radial nach außen weisende Schneidkante 3''' besitzt. Zwischen diesem Schneidring 3'' und dem zylindrischen Endbereich 3' ist die Spreizhülse 3 mit einer konischen Einschnürung $3^{IV}$ versehen, die sich zum Schneidring 3'' hin verjüngt. Innen ist die Spreizhülse 3 durchgehend zylindrisch gestaltet, wobei ihr Innendurchmesser im wesentlichen dem Außendurchmesser des Aufnahmebereichs 1'' des Gewindeankers 1 entspricht.

Zur Montage wird der Schwerlastanker in seinem in Fig. 1 dargestellten Ausgangszustand durch die im zu befestigenden Gegenstand 9 vorhandene Bohrung 9' in das Aufnahmeloch 5 eingeschoben. Sodann werden durch Betätigen der Spannmutter 7 der Gewindeanker 1 und mit ihm sein Spannkonus 4 zurückbewegt, wobei es zu einer entsprechenden Aufweitung der Spreizhülse 3 an ihrem den Schneidring 3'' tragenden Ende kommt, der sich dabei im wesentlichen radial in das Aufnahmematerial 6 einschneidet bzw. eingräbt. Dadurch kommt es schließlich zu dem in Fig. 2 dargestellten formschlüssigen Hinterschneidsitz des Schneidringes 3'' im Aufnahmematerial 6, wobei zugleich die Spreizhülse mit ihrer konischen Einschnürung $3^{IV}$ überall fest an der Lochwandung 5' anliegt, und damit hier auch für einen entsprechend reibschlüssigen Haftsitz und eine entsprechende Abstützung der Lochwandung sorgt. Auf diese Weise wird mit einfachsten Mitteln ein ausgezeichneter Verankerungssitz erzielt. Bei Rißbildung oder entsprechend großer Lasteinwirkung kann an der Spreizhülse aufgrund der in das Aufnahmematerial eingedrungenen Schneidkanten kein Axialschlupf entstehen, wodurch im Zusammenwirken mit der konusförmigen Gestaltung des Spreizteiles eine sofortige Nachspreizung erfolgt.

Wie aus Fig. 2 hervorgeht, kann im Gewindebereich 1''' des Gewindeankers 1 noch ein ringartiger Markierungseinschnitt $1^{IV}$ vorhanden sein, der bei der in Fig. 2 dargestellten ordnungsgemäßen Montage des Schwerlastankers aus der Spannmutter 7 rückwärtig herausragt und auf diese Weise den ordnungsgemäßen Verankerungssitz des Schwerlastankers anzuzeigen erlaubt. Dieser Markierungseinschnitt $1^{IV}$ kann so eng bzw. tief eingeschnitten sein, daß sich das dazu rückwärtig gelegene Gewindeende $1^V$ durch Hammerschlag od. dgl. leicht vom Gewindeanker abtrennen läßt.

Der in Fig. 3 dargestellte Schwerlastanker unterscheidet sich von dem vorbeschriebenen im wesentlichen dadurch, daß hier der Gewindeanker 1 einen bis auf seinen vorderen Spreizkonus 4 durchgehend zylindrischen Schaft besitzt, auf dem die Spreizhülse 3 sowie dahinter eine Distanzhülse 10 mit jeweils entsprechend bemessenem Innendurchmesser angeordnet sind. Die Spreizhülse 3 ist hier an ihrem vorderen Ende ebenfalls mit einem V-förmig profilierten Schneidring 3" und radial nach außen weisender Schneidkante 3''' sowie einer sich dahin verjüngenden konischen Einschnürung 3$^{IV}$ versehen. Darin sind aber noch weitere V-förmig profilierte Schneidringe 3$^V$ mit radial nach außen weisenden Schneidkanten vorhanden. Die Schneidringe 3", 3$^V$ bzw. deren Schneidkanten 3''' besitzen alle den gleichen Durchmesser und fluchten mit dem übrigen zylindrischen Teil 3' der Spreizhülse 3. Auch hier kommt es bei einem durch Betätigen der Spannschraube 7 hervorgerufenen Zurückziehen des Konus 4 zu einer Aufweitung der Spreizhülse 3, bei der deren Schneidringe bzw. Schneidkanten 3''' in die Aufnahmelochwandung einschneiden und somit einen formschlüssigen Verankerungssitz ergeben, wobei sich die zwischen den einzelnen Schneidkanten bzw. -ringen vorhandenen, unterschiedlich tiefen Flächen wiederum fest gegen die Lochwandung anlegen.

Der in Fig. 4 dargestellte Schwerlastanker besitzt als Ankerbolzen einen mit einem das Lastaufnahmemittel bildenden Betätigungskopf 11' versehenen Schraubbolzen 11, auf dessen setzrichtungsseitigem Gewindeende der mit entsprechendem Innengewinde 12' versehene Spreizkonus 12 schraubverstellbar gelagert ist. Zwischen diesem und dem Schraubbolzenkopf 11' sind die Spreizhülse 3, ein verformbarer Zwischenring 13 aus Leichtmetall od. dgl. und eine Distanzhülse 14 auf dem Schraubbolzen gelagert, wobei auf letzterer noch ein axial nachgiebiger Federring 15 sitzt. Auch in diesem Fall ist die Spreizhülse 3 mit einer konischen Einschnürung 3$^{IV}$ und einem daraus vorspringenden Schneidring 3" mit radial nach außen weisender Schneidkante 3''' versehen. Im dargestellten Zustand wird der Schwerlastanker in die Lochwandung eingesetzt. Durch Betätigen bzw. Drehen des Schraubbolzens 11 wird der Spreizkonus 12 in die Spreizhülse 3 eingezogen, die sich dadurch entsprechend aufweitet und mit ihrem V-förmig profilierten Schneidring 3" in das Aufnahmematerial eingräbt. Da auch hier die Spreizhülse 3 beim vorerwähnten Eingraben bzw. Einschneiden im Aufnahmematerial axial nicht verschoben wird, mithin sich der Schraubbolzen 11 beim Setzvorgang weiter in Setzrichtung bewegt, wird der dabei notwendige axiale Längenausgleich über den entsprechend verformbaren Zwischenring 13 sowie den Federring 15 bewirkt, der sicherstellt, daß der Schraubbolzenkopf 11' im fertig montierten Zustand fest an dem zu befestigenden Gegenstand, z.B. 9, zur Anlage kommt.

## Patentansprüche

1. Schwerlastanker zur Verankerung in einem in hartem Aufnahmematerial, insbesondere Beton, vorgeformten Loch, mit einem an seinem setzrichtungsseitigen Ende einen Spreizkonus und an seinem anderen rückwärtigen Ende Lastaufnahmemittel tragenden Ankerbolzen sowie einer darauf verschieblich sitzenden, längsgeschlitzten und durch den relativ zu ihr bewegbaren Spreizkonus aufweitbaren Spreizhülse, die im rückwärtigen Bereich dem Lochdurchmesser entsprechend zylindrisch gestaltet ist und in ihrem längsgeschlitzten Spreizbereich eine nach außen offene Einschnürung sowie an ihrem dem Spreizkonus zugewandten Ende einen aus der Einschnürung vorspringenden, mit einer Schneidkante versehenen Schneidring aufweist, dadurch gekennzeichnet, daß die Einschnürung (3$^{IV}$) mit zum Schneidring (3") abnehmendem Außendurchmesser konisch ausgebildet ist und der Schneidring (3") ein V-förmiges Profil mit radial nach außen weisender Schneidkante (3''') besitzt.

2. Schwerlastanker nach Anspruch 1, dadurch gekennzeichnet, daß die Spreizhülse (3) innen durchgehend zylindrisch gestaltet ist.

3. Schwerlastanker nach Anspruch 2, dadurch gekennzeichnet, daß die Spreizhülse (3) in ihrem konischen Einschnürungsbereich (3$^{IV}$) mit weiteren V-förmig profilierten Schneidringen (3$^V$) versehen ist, deren nach außen weisende Schneidkanten (3''') durchweg gleiche Durchmesser besitzen und mit dem rückwärtigen zylindrischen Bereich (3') der Spreizhülse (3) fluchten.

4. Schwerlastanker nach einem der Ansprüche 1 bis 3, dadurch gekennzeichnet, daß der Ankerbolzen als Gewindeanker (1) mit fest auf ihm sitzendem Spreizkonus (4) und einer auf seinem rückwärtig angebrachten Schraubgewinde (1''') sitzenden Spannmutter (7) ausgebildet ist.

5. Schwerlastanker nach Anspruch 4, dadurch gekennzeichnet, daß der Gewindeanker (1) einen im Durchmesser dem Ausnahmeloch entsprechenden zylindrischen Mittelbereich (1'), zwischen letzterem und dem Spreizkonus (4) einen im Durchmesser entsprechend kleineren Aufnahmebereich (1") für die Spreizhülse (3) und rückwärtig den Gewindebereich (1''') für die Spannmutter (7) besitzt.

6. Schwerlastanker nach Anspruch 5, dadurch gekennzeichnet, daß im Gewindebereich (1''') des Gewindeankers (1) ein bei dessen ordnungsgemäßer Montage aus der Spannmutter (7) rückwärtig herausragender Markierungs-Einschnitt (1$^{IV}$) vorgesehen ist.

7. Schwerlastanker nach Anspruch 6, dadurch gekennzeichnet, daß das rückwärtig des Markierungs-Einschnitts (1$^{IV}$) gelegene Gewindeende (1$^V$) vom Gewindeanker (1) abtrennbar ist.

8. Schwerlastanker nach Anspruch 4, dadurch gekennzeichnet, daß der Gewindeanker (1) einen bis auf seinen vorderen Spreizkonus (4) durchgehend zylindrischen Schaft besitzt, auf dem die Spreizhülse (3) sowie dahinter an deren vom Spreizkonus abgewandten Ende anschließend eine Distanzhülse (10) mit jeweils entsprechend bemessenem Innendurchmesser angeordnet sind.

9. Schwerlastanker nach einem der Ansprüche 1 bis 3, dadurch gekennzeichnet, daß der Ankerbolzen als mit einem das Lastaufnahmemittel bildenden Betätigungskopf (11') versehener Schraubbolzen (11) ausgebildet ist, auf dessen setzrichtungsseitigem Gewindeende der mit entsprechendem Innengewinde (12') versehene Spreizkonus (12) schraubverstellbar gelagert ist, wobei zwischen dem Spreizkonus (12) und dem Schraubbolzenkopf (11') die Spreizhülse (3), ein verformbarer Zwischenring (13) und eine einen axial nachgiebigen Federring (15) tragende Distanzhülse (14) auf dem Schraubbolzen (11) gelagert sind.

## Claims

1. Heavy-duty anchor for anchoring in a preformed hole in hard receiving material, particularly concrete, comprising an anchor bolt carrying a spreader cone at its end to be anchored and load-receiving means at its other, rearward end, as well as an expansible sleeve which is seated displaceably on the anchor bolt, which is longitudinally slotted and which is expandable by the spreader cone being moved relative thereto, said expansible sleeve being cylindrical at the rearward portion thereof corresponding to the diameter of the hole and, at its longitudinally slotted expansible region, having an outwardly open throat as well as, at its end facing the spreader cone, a cutting ring projecting from the throat and provided with a cutting edge, characterised in that the throat ($3^{IV}$) is tapered with an external diameter which decreases towards the cutting ring (3"), and the cutting ring (3") has a V-shaped profile with radially outwardly projecting cutting edge (3"').

2. Heavy-duty anchor according to claim 1, characterised in that the expansible sleeve (3) is internally cylindrical throughout its length.

3. Heavy-duty anchor according to claim 2, characterised in that the expansible sleeve (3) is provided in its tapered throat region ($3^{IV}$) with further V-shaped profiled cutting rings ($3^V$), the outwardly projecting cutting edges (3"') of which are of the same diameter throughout and which are in alignment with the rearward cylindrical portion (3') of the expansible sleeve (3).

4. Heavy-duty anchor according to one of claims 1 to 3, characterised in that the anchor bolt is formed as a threaded anchor (1) with spreader cone (4) seated fixedly thereon and a tightening nut (7) provided on the rearward screw-threaded portion (1"') thereof.

5. Heavy-duty anchor according to claim 4, characterised in that the threaded anchor (1) has a cylindrical middle region (1') which corresponds in diameter to that of the receiving hole, a correspondingly smaller diameter seating portion (1") for the expansible sleeve (3) positioned between the middle portion and the spreader cone (4), and, rearwardly of the seating portion, the threaded portion (1"') for the tightening nut (7).

6. Heavy-duty anchor according to claim 5, characterised in that in the threaded region (1"') of the threaded anchor (1) there is provided an indicator cut-out ($1^{IV}$) which is located rearwardly of the tightening nut (7) when the anchor is properly installed.

7. Heavy-duty anchor according to claim 6, characterised in that the threaded end ($1^V$) which is positioned rearwardly of the indicator cut-out ($1^{IV}$) is separable from the threaded anchor (1).

8. Heavy-duty anchor according to claim 4, characterised in that the threaded anchor (1) includes a stem which is cylindrical throughout up to its front-end spreader cone (4), and, on said stem, are positioned the expansible sleeve (3) as well as a spacer sleeve (10) behind the expansible sleeve at the end thereof remote from the spreader cone, with the internal diameters of said sleeves being appropriately dimensioned.

9. Heavy-duty anchor according to one of claims 1 to 3, characterised in that the anchor bolt is formed as a screw bolt (11) provided with an actuating head (11') forming the load-receiving means, wherein a spreader cone (12) is screw-adjustably mounted on the threaded end of the screw bolt at its anchorage end, said spreader cone being provided with a corresponding internal thread (12'), wherein, between the spreader cone (12) and the screw bolt head (11'), there are mounted on the screw bolt (11) the expansible sleeve (3), a deformable intermediate ring (13) and a spacer sleeve (14) carrying an axially flexible spring ring (15).

## Revendications

1. Dispositif d'ancrage pour charges lourdes destiné à réaliser un ancrage dans un trou préformé dans un matériau de réception dur, notamment du béton, comportant un boulon d'ancrage pourvu d'un cône d'expansion au niveau de son extrémité tournée vers la direction de montage et de moyens de support de charge au niveau de son autre extrémité arrière, ainsi qu'une coquille d'expansion fendue longitudinalement, montée de manière à être déplaçable sur ledit boulon d'ancrage et apte à être élargie par le cône d'expansion mobile par rapport à elle, coquille que présente, dans sa partie arrière, une configuration cylindrique correspondant au diamètre du trou et comporte, dans sa zone d'expansion fendue longitudinalement, un rétrécissement ouvert vers l'extérieur et, au niveau de son extrémité adjacente au cône d'expansion, une bague coupante faisant saillie hors du rétrécissement et pourvue d'une arête de coupe, caractérisé en ce que le rétrécissement ($3^{IV}$) est conçu suivant une forme conique, con diamètre extérieur allant en diminuant jusqu'à la bague coupante (3") et en ce que la bague coupante (3") possède un profil en forme de V comportant une arête de coupe (3"') tournée radialement vers l'extérieur.

2. Dispositif d'ancrage pour charges lourdes selon la revendication 1, caractérisé en ce que la coquille d'expansion (3) possède intérieurement une configuration cylindrique continue.

3. Dispositif d'ancrage pour charges lourdes selon la revendication 2, caractérisé en ce que la coquille d'expansion (3) est pourvue, dans sa zone de rétrécissement conique ($3^{IV}$), de bagues coupantes supplémentaires profilées en forme de V dont les arêtes de coupe (3"') tournées vers l'extérieur possèdent un diamètre constant sur toute leur étendue et sont alignées avec la zone cylindrique arrière (3') de la coquille d'expansion (3).

4. Dispositif d'ancrage pour charges lourdes selon l'une des revendications 1 à 3, caractérisé en ce que le boulon d'ancrage est réalisé sous la forme d'un organe d'ancrage fileté (1) possédant un cône d'expansion (4) monté fixement sur lui, et un écrou de serrage (7) vissé sur son filetage (1''') situé à l'arrière.

5. Dispositif d'ancrage pour charges lourdes selon la revendication 4, caractérisé en ce que l'organe d'ancrage fileté (1) possède une zone médiane cylindrique (1') dont le diamètre correspond à celui du trou de réception et, entre cette zone et le cône d'expansion (4), une zone de réception (1'') possédant un diamètre comparativement plus faible pour la coquille d'expansion (3) et, à l'arrière, la zone filetée (1''') pour l'écrou de serrage (7).

6. Dispositif d'ancrage pour charges lourdes selon la revendication 5, caractérisé en ce qu'une entaille de marquage (1$^{IV}$) faisant saillie en arrière hors de l'écrou de serrage (7) lorsque son montage est correct est prévue dans la zone filetée (1''') de l'organe d'ancrage fileté (1).

7. Dispositif d'ancrage pour charges lourdes selon la revendication 6, caractérisé en ce que l'extrémité filetée (1$^{V}$) située en arrière de l'entaille de marquage (1$^{IV}$) est séparable de l'organe d'ancrage fileté (1).

8. Dispositif d'ancrage pour charges lourdes selon la revendication 4, caractérisé en ce que l'organe d'ancrage fileté (1) possède une tige cylindrique qui s'étend de façon continue jusqu'à son cône d'expansion avant (4) et sur laquelle sont disposées la coquille d'expansion (3) ainsi qu'en arrière, à la suite de son extrémité opposée au cône d'expansion, une douille d'espacement (10) possédant un diamètre intérieur dimensionné de manière correspondante.

9. Dispositif d'ancrage pour charges lourdes selon l'une des revendications 1 à 3, caractérisé en ce que le boulon d'ancrage est réalisé sous la forme d'un boulon fileté (11) pourvu d'une tête de manœuvre (11') constituant les moyens de support de charge, boulon fileté sont l'extrémité filetée située du côté de la direction de montage porte, monté sur elle de manière déplaçable par vissage, le cône d'expansion (12) pourvu d'un taraudage correspondant (12'), étant précisé que la coquille d'expansion (3), une bague intermédiaire déformable (13) et une douille d'espacement (14) portant une bague élastique (15) apte à fléchir axialement sont montées sur le boulon fileté (11) entre le cône d'expansion (12) et la tête (11') dudit boulon.

EP 0 218 932 B1

Fig. 1

Fig. 2

Fig. 3

Fig. 4